# EUROPÄISCHE PATENTSCHRIFT

(11) **EP 1 382 100 B1**
(45) Veröffentlichungstag und Bekanntmachung des Hinweises auf die Patenterteilung: **09.02.2005**
(21) Anmeldenummer: 02748554.9
(22) Anmeldetag: 18.04.2002
(51) Int. Cl.: H02B 11/24

(54) **SCHUTZEINRICHTUNG GEGEN BERÜHREN SPANNUNGSFÜHRENDER KONTAKTE IN EINEM EINSCHUBRAUM EINES SCHALTGERÄTES**
PROTECTIVE UNIT TO PREVENT CONTACT WITH CONDUCTIVE CONTACTS IN A WITHDRAWABLE RACK OF A SWITCHING DEVICE
DISPOSITIF DE PROTECTION EMPECHANT TOUT CONTACT AVEC DES CONTACTS CONDUCTEURS DANS UN TIROIR D'UN APPAREIL DE COMMUTATION

(30) Priorität: 23.04.2001 DE 10120749
(43) Veröffentlichungstag der Anmeldung: 21.01.2004
(73) Patentinhaber: SIEMENS AKTIENGESELLSCHAFT, 80333 München (DE)
(72) Erfinder: DEYLITZ, Erhard, 13125 Berlin (DE); MAREK, Kathrina, 16341 Zepernick (DE)
(86) Internationale Anmeldenummer: PCT/DE2002/001464
(87) Internationale Veröffentlichungsnummer: WO 2002/087038

(56) Entgegenhaltungen:
- US-A- 6 031 191

## Beschreibung

Die Erfindung liegt auf dem Gebiet der elektrischen Schalter und ist bei der konstruktiven Gestaltung eines Einschubrahmens für ein verschiebbar angeordnetes Schaltgerät anzuwenden, bei dem eine Schutzeinrichtung gegen Berühren spannungsführender Kontakte vorgesehen ist

Bei einem bekannten Einschubrahmen ist eine Schutzeinrichtung mit zwei beweglichen Schutzplatten - die zur Freigabe von in einer Abdeckplatte ausgebildeten Zugangsöffnungen zu ankommenden und abgehenden Kontakten verschiebbar sind - und zwei Hebelanordnungen zur Betätigung der beiden Schutzplatten vorgesehen. Dabei weist jede der beiden Hebelanordnungen zwei gelenkig miteinander verbundene Hebel auf, von denen ein erster Hebel mittels des Schaltgerätes betätigbar und der zweite Hebel an die bewegliche Schutzplatte angekoppelt ist, wobei der erste Hebel in einer ersten Phase der Einschubbewegung des Schaltgerätes - zum Schwenken des zweiten Hebels - verschiebbar und in einer zweiten Phase der Einschubbewegung - ohne weiteres Schwenken des zweiten Hebels - schwenkbar ist (EP 0 803 140 B1).

Bei dieser bekannten Schutzeinrichtung sind die dem Schaltgerät zugeordneten Enden der beiden ersten Hebel gelenkig miteinander verbunden, wobei das Verbindungsgelenk der beiden ersten Hebel zugleich das Schwenklager dieser Hebel bildet. Um das Schaltgerät nach Freigabe der Zugangsöffnungen bis in seine Endstellung im Einschubrahmen schieben zu können, sind die beiden ersten Hebel unter der Krafteinwirkung des einfahrenden Schaltgerätes dadurch verschiebbar, dass jeweils das Verbindungsgelenk zwischen dem ersten und dem zweiten Hebel entlang einer Kulisse verschiebbar ist. Hierbei kann ein Verklemmen des Verbindungsgelenkes in der Kulisse beim Weiterschieben des Schaltgerätes zur Beschädigung der Hebelanordnung führen.

Ausgehend von einer Schutzeinrichtung mit den Merkmalen des Oberbegriffes des Anspruches 1 (EP 0 803 140 B1) liegt der Erfindung die Aufgabe zugrunde, die Hebelanordnung so zu gestalten, dass nach Freigabe der Zugangsöffnungen zu den Kontakten ein Herausschieben der Hebelanordnung aus der Bewegungsbahn des Schaltgerätes unter der Kraft des einfahrenden Schaltgerätes nicht erforderlich ist.

Diese Aufgabe wird erfindungsgemäß dadurch gelöst, dass das Verbindungsgelenk der beiden Hebel zugleich das Schwenklager des ersten Hebels bildet, dass der erste Hebel einen Kulissenstein aufweist und dass im Einschubrahmen zwei Führungsflächen angeordnet sind, die eine stufenartig in Schwenkrichtung des ersten Hebels verlaufende Kulisse für den Kulissenstein bilden, wobei die eine der beiden Führungsflächen zwei den beiden Einschubphasen zugeordnete, im wesentlichen in Verschiebungsrichtung des ersten Hebels verlaufende Trittstufen für den Kulissenstein bilden und wobei die die beiden Trittstufen verbindende Setzstufe in Schwenkrichtung des ersten Hebels verläuft und eine dem Kulissenstein zugeordnete Anschlagfläche bildet. - Aufgrund einer derartigen Ausgestaltung ist der erste Hebel kurz nach Freigabe der Zugangsöffnungen aus der Bewegungsbahn des Schaltgerätes heraus in eine Endstellung schwenkbar. Durch die Entkopplung des dem Schaltgerät zugeordneten Endes des ersten Hebels von dem Schaltgerät ist eine Beschädigung des Hebelsystems beim Einfahren des Schaltgerätes in seine Endstellung sicher ausgeschlossen.

Eine zweckmäßige Weiterbildung der neuen Schutzeinrichtung sieht vor, dass die zweite Führungsfläche eine in Schwenkrichtung des ersten Hebels verlaufende zweite Setzstufe und eine in Einschubrichtung verlaufende dritte Trittstufe für den Kulissenstein bildet und dass der erste Hebel bei Nichtbetätigung unter der Kraft einer Rückstellfeder in einer Anfangstellung gehalten ist, bei der die zweite Setzstufe eine dem Kulissenstein zugeordnete zweite Anschlagfläche und bei der die dritte Trittstufe eine dritte Anschlagfläche bildet, die einem am ersten Hebel ausgebildeten Anschlagzapfen zugeordnet ist. - Hierdurch ist es möglich, die Hebelanordnung bei herausgefahrenem Schalter in einer Anfangsstellung zu verriegeln, bei der nur eine in Schwenkrichtung des ersten Hebels wirkende Kraft zum Entriegeln der Hebelanordnung führt. Dagegen führt jede in eine andere Richtung beispielsweise bei Montagearbeiten auf den ersten Hebel wirkende Kraft zur Blockierung des Hebelsystems an der zweiten und/oder dritten Anschlagfläche.

Zum Betätigen des ersten Hebels kann mit Vorteil eine dem freien Ende des ersten Hebelarms zugeordnete, vom Schaltgerät geführte Formkurve vorgesehen sein, die eine erste in Einschubrichtung des Schaltgerätes geneigte Arbeitsfläche aufweist, mittels derer der erste Hebel im Bereich der ersten Trittstufe verschiebbar und am Ende der ersten Trittstufe sich an die erste Setzstufe anlegend schwenkbar ist. - Hierdurch ist ein der Neigung der Arbeitsfläche entsprechendes Anheben der Schutzplatte über wenige Millimeter Verfahrweg des Schaltgerätes möglich, kurz bevor an der Rückseite des Schaltgerätes hervorstehende Kontakte in die Zugangsöffnungen der Abdeckplatte eingreifen.

Eine im Hinblick auf die Entkopplung des ersten Hebels von dem Schaltgerät beim Einfahren des Schaltgerätes und der erneuten Ankopplung beim Herausfahren des Schaltgerätes vorteilhafte Weiterbildung der Erfindung sieht vor, dass die erste Arbeitsfläche der Formkurve an einer Ausnehmung mündet, deren Seitenkanten parallel zur Einschubrichtung des Schaltgerätes verlaufen, wobei an der ersten Seitenkante eine Nase ausgebildet ist und wobei die zweite Seitenkante eine dem freien Ende des ersten Hebels zugeordnete vierte Anschlagfläche bildet.

Zur Entriegelung der Hebelanordnung aus seiner Anfangsstellung ist in weiterer Ausgestaltung der Erfindung vorgesehen, dass die Formkurve eine in Einschubrichtung des Schaltgerätes geneigte zweite Arbeitsfläche aufweist, mittels derer der erste Hebel so weit schwenkbar ist, dass der Kulissenstein über die Ebene der dritten Trittstufe hinaus sich an der ersten Trittstufe anlegend schwenkbar ist.

Die gemäß der Erfindung vorgesehene Formkurve kann an einem am Schaltgerät montierten Schalterfuß ausgebildet sein. Hierbei kann eine Schutzplatte, zu deren Betätigung zwei an ihren Enden angreifende Hebelanordnungen vorgesehen sind, gleichmäßig dadurch betätigt werden, dass an beiden Seitenflächen des Schaltgerätes je ein derart gestalteter Schalterfuß montiert ist.

In Weiterbildung der Erfindung weist das Hebelsystem einen den zweiten Hebel mit der Schutzplatte koppelnden dritten Hebel auf, wobei an dem dritten Hebel ein in ein Langloch des zweiten Hebels eingreifender Zapfen und eine der Schutzplatte zugeordnete Stützfläche ausgebildet sind. - Hierdurch können der erste und der zweite Hebel und die dem Kulissenstein zugeordnete Kulisse in einem freien Bauraum seitlich eines die Kontakte tragenden Trennkontaktgehäuses angeordnet sein.

Wenn man in weiterer Ausgestaltung der Erfindung Kontakten, die in zwei verschiedenen übereinander angeordneten Ebenen verlaufen, zwei separate Schutzplatten zuordnet, diese Schutzplatten mittels einer Zugfeder koppelt und an dem dritten Hebel eine Stützfläche und eine Haltefläche vorsieht, wobei die Stützfläche einer in der oberen Ebene verlaufenden Schutzplatte und die Haltefläche einer in der unteren Ebene verlaufenden Schutzplatte zugeordnet ist, dann können die beiden Schutzplatten bei herausgefahrenem Schalter unabhängig voneinander - beispielsweise zur Freigabe der ankommenden und/oder der abgehenden Kontakte - verschoben werden.

Ein Ausführungsbeispiel der neuen Schutzeinrichtung ist in den Figuren 1 bis 8 dargestellt. Dabei zeigen
Figur 1 einen Ausschnitt eines mit einem Trennkontaktgehäuse versehenen Einschubrahmens,
Figur 2 das Trennkontaktgehäuse gemäß Figur 1, an dem eine geschnitten dargestellte Schutzeinrichtung gegen Berühren spannungsführender Kontakte montiert ist,
Figur 3 einen vergrößerten Ausschnitt des Trennkontaktgehäuses gemäß Figur 2 bei nicht montierter Schutzeinrichtung,
Figur 4 den Ausschnitt gemäß Figur 3 bei montierter Schutzeinrichtung und
Figuren 5 bis 8 eine Seitenansicht des Ausschnittes gemäß Figur 4 in verschiedenen Phasen der Einschubbewegung eines Einschubschaltgerätes.

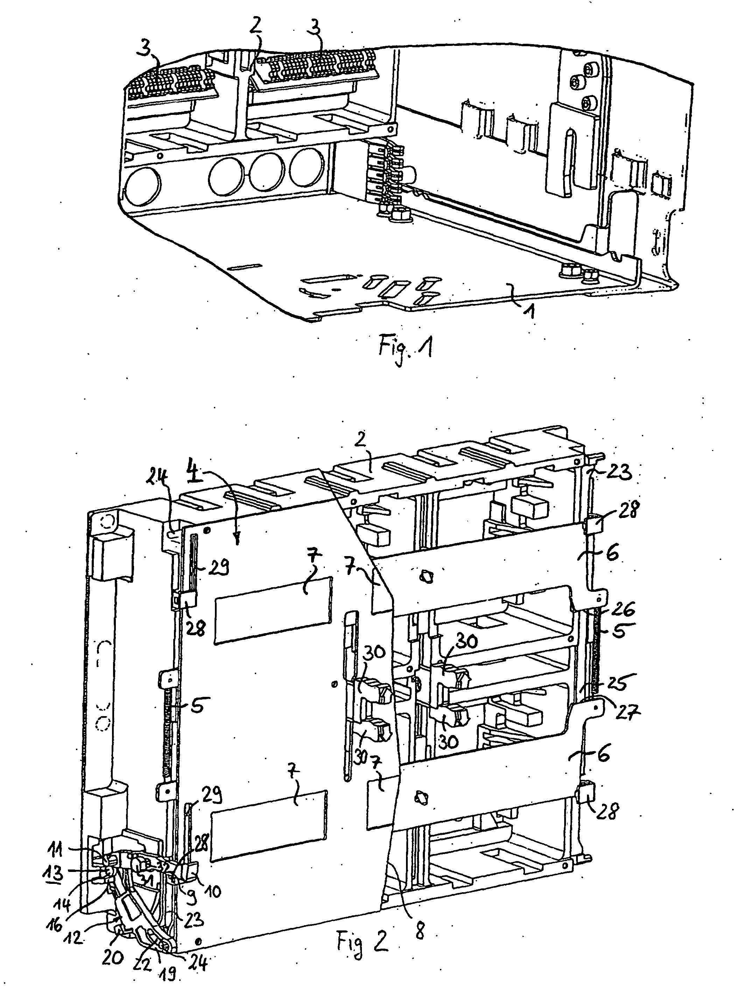

Der in Figur 1 gezeigte Einschubrahmen 1 ist mit einem Trennkontaktgehäuse 2 versehen, das zur Aufnahme von spannungsführenden Kontakten dient, von denen in nicht weiter dargestellter Weise ankommende und abgehende Kontakte in übereinander angeordneten Ebenen angeordnet sind.

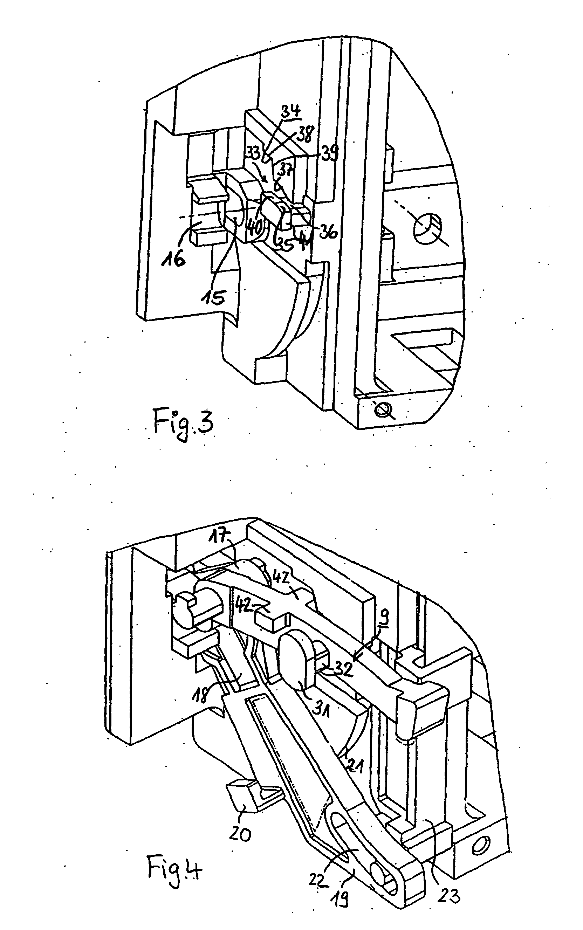

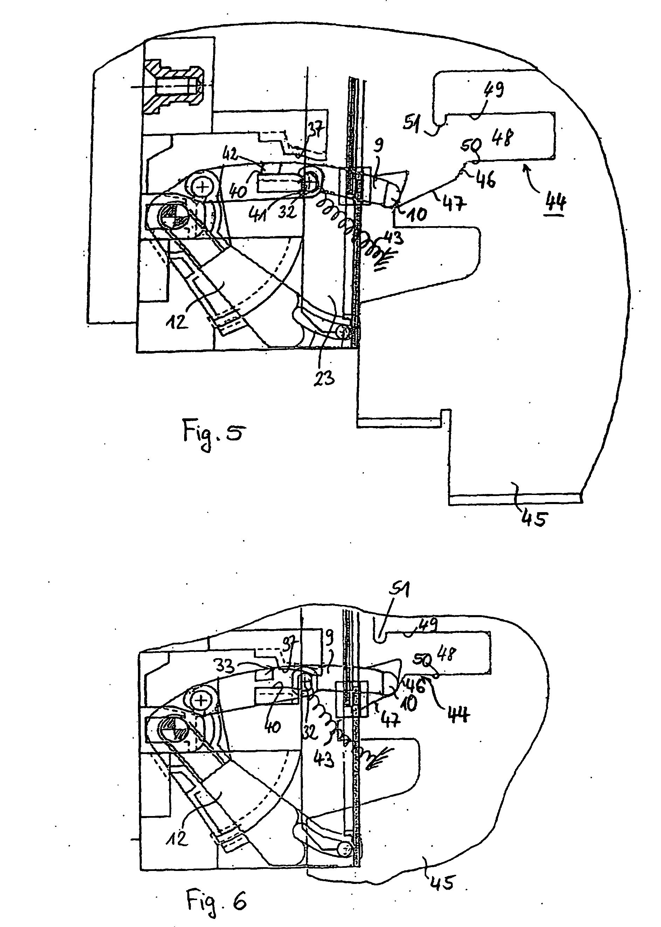

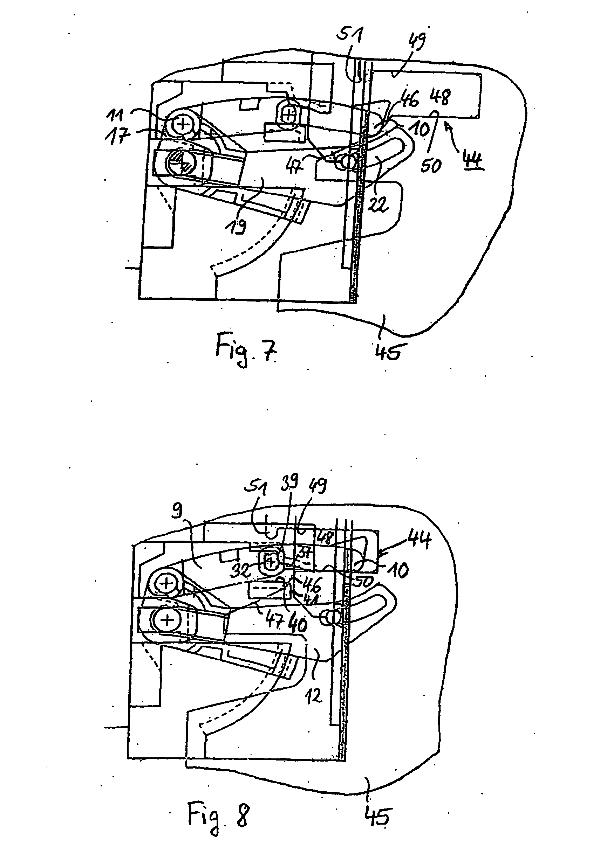

Gemäß der Figur 2 ist an dem Trennkontaktgehäuse 2 eine Schutzeinrichtung 4 gegen Berühren der spannungsführenden Kontakte 3 montiert. Hierbei weist die Schutzeinrichtung 4 zwei, den in zwei Ebenen angeordneten Kontakten zugeordnete, mittels zweier Zugfedern 5 gekoppelte bewegliche Schutzplatten 6, eine mit Zugangsöffnungen 7 zu den Kontakten versehene Abdeckplatte 8 sowie zwei gleich ausgebildete Hebelanordnungen zur Betätigung der Schutzplatten auf. Jede der beiden Hebelanordnungen weist drei Hebel auf, von denen ein erster Hebel 9 an einem freien Ende 10 mittels des Schaltgerätes betätigbar ist. Das andere Ende des ersten Hebels 9 ist mittels eines Verbindungsgelenkes 11 an einem zweiarmigen zweiten Hebel 12 angelenkt, wobei das Verbindungsgelenk 11 nahe eines ortsfesten Schwenklagers 13 des zweiten Hebels angeordnet ist. Das ortsfeste Schwenklager 13 ist dabei von zwei Lagerzapfen 14 (in den Figuren 2 und 4 ist nur ein Lagerzapfen sichtbar) und zwei den Lagerzapfen 14 zugeordneten Lagerschalen (siehe auch Figur 3) 15, 16 gebildet. Die Lagerzapfen 14 sind dabei an beiden Seiten einer einstückig mit dem Hebelkörper des zweiten Hebels 12 ausgebildeten elastischen Zunge 18 angeordnet. Die beiden Lagerschalen 15, 16, von denen die eine Lagerschale 15 im wesentlichen zylindrisch und die zweite Lagerschale 16 halbzylindrisch gestaltet ist, sind gemäß Figur 3 mit gegenseitigem Abstand angeordnet, der etwa der Dicke der Zunge 18 (vgl. auch Figur 4) entspricht. Während an dem ersten Hebelarm 17 des zweiten Hebels 12 der erste Hebel angreift, sind dem zweiten Hebelarm 19 des zweiten Hebels 12 zwei hakenartige, quer zur Schwenkrichtung des zweiten Hebels von dem zweiten Hebel abragende Ansätze 20 ausgebildet, von denen eine je nach Anordnung der Hebelanordnung an der einen oder der anderen Seiten des Trennkontaktträgers eine bogenförmige Kante 21 am Trennkontaktgehäuse hintergreift und damit den zweiten Hebel axial fixiert. In dem zweiten Hebelarm 19 ist weiterhin ein Langloch 22 ausgebildet. Der dritte Hebel 23 ist quer zu seiner Verschiebungsrichtung symmetrisch ausgebildet und weist an seinen beiden Enden je einen Zapfen 24 auf, von denen je nach Anordnung der Hebelanordnung an der rechten oder linken Seite des Trennkontaktgehäuses einer in das im zweiten Hebelarm 19 ausgebildete Langloch 22 eingreift. Weiterhin weist der dritte Hebel 23 einen mittig angeordneten, in die Ebene der Schutzplatten 6 ragenden Vorsprung 25 auf, von dessen Seitenflächen 26, 27 je nach Anordnung der Hebelanordnung an der rechten oder linken Seitenfläche des Trennkontaktgehäuses die eine eine der oberen Schutzplatte zugeordnete Stützfläche 26 und die andere eine der unteren Schutzplatte zugeordnete Haltefläche 27 bildet. An dem dritten Hebel sind weiterhin hakenartige Ansätze 28 ausgebildet, die die mit den Zugangsöffnungen 7 versehene Abdeckplatte 8 im Bereich je zweier, an der rechten und der linken Seite ausgebildeten, Führungsöffnungen 29 schnappriegelartig hintergreifen. Dabei sind die dritten Hebel 23, die beiden beweglichen Schutzplatten 6, die Abdeckplatte 8 und vier an den Schutzplatten gehaltene Betätigungselemente 30 zu einer Funktionseinheit verbunden, sobald die beiden dritten Hebel 23 mittels der hakenartigen Ansätze 28 in den Führungsöffnungen 29 der Abdeckplatte 8 verrastet sind. Diese Funktionseinheit kann auf einfache Weise vormontiert werden.

Gemäß der Figur 4 weist der erste Hebel 9 an jeder Seite einen mit einem Flansch (Bund) 31 versehenen Kulissenstein 32 (von denen in den Figuren 2 und 4 jeweils nur der eine sichtbar ist) auf. Der nicht sichtbare zweite Kulissenstein ist dabei in einer in Schwenkrichtung des ersten Hebels stufenartig verlaufenden Kulisse 33 geführt (siehe auch Figur 3), die von zwei Führungsflächen 34 und 35 gebildet ist. Dabei ist der erste Hebel 9 über den in einer Nut 36 geführten Flansch 31 axial fixiert.

Die Führungsfläche 34 bildet zwei im wesentlichen in Verschiebungsrichtung des ersten Hebels verlaufende Trittstufen 37 und 38 für den Kulissenstein, die verschiedenen Phasen der Eintrittbewegung eines Einschubschaltgerätes zugeordnet sind. Die die beiden Trittstufen 37 und 38 verbindende Setzstufe 39 verläuft in Schwenkrichtung des ersten Hebels 9. Die zweite Führungsfläche 35 bildet eine in Verschiebungsrichtung des ersten Hebels 9 verlaufende dritte Trittstufe 40 sowie eine ebenfalls in Schwenkrichtung des ersten Hebels 9 verlaufende zweite Setzstufe 41.
An dem ersten Hebel 9 sind weiterhin zwei Anschlagzapfen 42 ausgebildet, von denen einer, je nach Anordnung der Hebelanordnung an der rechten oder linken Seite des Trennkontaktgehäuses, der dritten Trittstufe 40 zugeordnet ist. Der erste Hebel 9 ist mittels einer Rückstellfeder 43 (vgl. Figur 5) bei nichtbetätigter Hebelanordnung unter Federvorspannung in einer Anfangsstellung gehalten, bei der der Anschlagzapfen 42 an der dritten Trittstufe 40 anliegt. Die Rückstellfeder greift dabei zum einen am Kulissenstein 32 und zum anderen, in nicht weiter dargestellter Weise, an einer Seitenwand des Einschubrahmens an.

Gemäß der Figuren 5 bis 8 dient zur Betätigung des freien Endes 10 des ersten Hebels 9 eine Formkurve 44, die an einem Schalterfuß 45 ausgebildet ist, der an einer Seitenfläche eines nicht weiter dargestellten Einschubschaltgerätes montiert ist. Diese Formkurve 44 weist zwei in Einschubrichtung geneigte Arbeitsflächen 46 und 47 auf, wobei eine erste der beiden Arbeitsflächen 46 an einer Ausnehmung 48 mündet, deren Seitenkanten 49 und 50 parallel zur Einschubrichtung des Schaltgerätes verlaufen. Dabei ist an der einen Seitenkante 49 eine Nase 51 ausgebildet.

Figur 5 zeigt die Hebelanordnung 9, 12 und 23 bei in Trennstellung befindlichem Einschubschaltgerät. Zu diesem Zeitpunkt befindet sich der erste Hebel 9 in seiner Anfangstellung, bei der der Anschlagzapfen 42 an der dritten Trittstufe 40 und der Kulissenstein 32 an der zweiten Setzstufe 41 anliegen. Das freie Ende 10 des ersten Hebels 9 liegt der zweiten Arbeitsfläche 47 gegenüber, so dass der erste Hebel 9 beim Weiterschieben des Einschubschaltgerätes entgegen dem Uhrzeigersinn so weit geschwenkt wird, bis der Kulissenstein 32 oberhalb der Ebene der dritten Trittstufe 40 gelangt und an der ersten Trittstufe 37 anschlägt. Aufgrund dieser Schwenkbewegung des ersten Hebels 9 ist die Hebelanordnung und damit die Schutzeinrichtung mit Erreichen der Teststellung entriegelt (vgl. auch Figur 6). In dieser Teststellung sind die Zugangsöffnungen 7 der Abdeckplatte weiterhin mittels der Schutzplatten 6 überdeckt, da der zweite Hebel 12 beim Schwenken des ersten Hebels 9 nicht geschwenkt wird.

Dem freien Ende 10 des ersten Hebels 9 steht beim Erreichen der Teststellung die erste Arbeitsfläche 46 gegenüber. Beim Weiterschieben des Einschubschaltgerätes wird der erste Hebel 9 verschoben, wobei der Kulissenstein 32 in einem von der ersten Trittstufe 37 und der dritten Trittstufe 40 gebildeten Abschnitt der Kulisse 33 geführt wird. Dabei wird gemäß Figur 7 der dem Verbindungsgelenk 11 zugeordnete erste Hebelarm 17 entgegen dem Uhrzeigersinn geschwenkt. Der zweite Hebelarm 19, an dem das Langloch 22 ausgebildet ist, ist wesentlich länger als der erste Hebelarm 17, so dass bei geringer Verschiebung des Einschubschalters (etwa 8 mm) das Langloch 22 über eine große Bogenlänge schwenkt und dabei der dritte Hebel 23, der die Schutzplatten 6 hält, soweit gehoben wird (etwa 40 mm), dass die Zugangsöffnungen 7 freigegeben sind. Dieses Heben der Schutzplatten 6 erfolgt kurz bevor an der Rückseite des Einschubschaltgerätes hervorstehende Kontakte in die Zugangsöffnungen 6 eingreifen. Beim Weiterschieben des Einschubschaltgerätes gleitet der Kulissenstein 32 an der von der ersten Trittstufe 37 und der ersten Setzstufe 39 gebildeten rückspringenden Kante ab und der erste Hebel schwenkt gemäß Figur 8 in eine Endstellung, bei der der Kulissenstein 32 an der ersten Setzstufe 39 und das freie Ende 10 des ersten Hebels 9 an der zweiten Seitenkante 50 der Ausnehmung anliegt.

Beim Herausziehen des Einschubschaltgerätes aus dem Einschubrahmen wird in umgekehrter Weise zunächst der erste Hebel 9 über die an der ersten Seitenkante 49 der Ausnehmung 48 ausgebildeten Nase 51 soweit im Uhrzeigersinn geschwenkt, bis der Kulissenstein 32 unter der Kraft der Rückstellfeder 43 an einer von der ersten Setzstufe 39 und der ersten Trittstufe 37 gebildeten rückspringenden Kante abrutscht und in den von der ersten Trittstufe 37 und der dritten Trittstufe 40 gebildeten Abschnitt der Kulisse eintritt. Bei weiterem Herausziehen des Einschubschaltgerätes wird der erste Hebel 9 nach rechts verschoben, wobei der zweite Hebel 12 entgegen dem Uhrzeigersinn schwenkt und die Zugangsöffnungen 7 mittels der sich absenkenden Schutzplatten 6 verschlossen werden. Danach rutscht der Kulissenstein 32 an der von der dritten Trittstufe 40 und der zweiten Setzstufe 41 gebildeten zweiten rückspringenden Kante ab, so dass der erste Hebel 9 in seine Ausgangstellung schwenkt, ohne dass die Schutzplatten 6 weiter abgesenkt werden.

### Bezugszeichenliste

- 1: Einschubrahmen
- 2: Trennkontaktgehäuse
- 3: Spannungsführende Kontakte
- 4: Schutzeinrichtung
- 5: Zugfeder
- 6: Schutzplatten
- 7: Zugangsöffnungen zu den spannungsführenden Kontakten
- 8: Abdeckplatte
- 9: Erster Hebel der Hebelanordnung
- 10: Freies Ende des ersten Hebels
- 11: Verbindungsgelenk zwischen dem ersten und einem zweiten Hebel
- 12: Zweiter Hebel der Hebelanordnung
- 13: Ortsfestes Schwenklager des zweiten Hebels
- 14: Lagerzapfen des zweiten Hebels
- 15: Zylindrische Lagerschalen für die Lagerzapfen 14
- 16: Halbzylindrische Lagerschale
- 17: Erster Hebelarm des zweiten Hebels
- 18: Elastische Zunge
- 19: Zweiter Hebelarm des zweiten Hebels
- 20: Hakenartige Ansätze des zweiten Hebels
- 21: Bogenförmige Kante am Trennkontaktgehäuse
- 22: Langloch
- 23: Dritter Hebel der Hebelanordnung
- 24: Zapfen
- 25: Vorsprung
- 26: Seitenfläche des Vorsprungs, die eine Stützfläche der oben angeordneten Schutzplatte bildet
- 27: Seitenfläche des Vorsprungs, die eine Anlagefläche der unteren Schutzplatte bildet
- 28: Hakenartige Ansätze
- 29: Führungsöffnungen
- 30: Betätigungselemente
- 31: Flansch (Bund) des Kulissensteins
- 32: Kulissenstein
- 33: Kulisse
- 34: Erste Führungsfläche
- 35: Zweite Führungsfläche
- 36: Nut
- 37: Erste Trittstufe
- 38: Zweite Trittstufe
- 39: Erste Setzstufe
- 40: Dritte Trittstufe
- 41: Zweite Setzstufe
- 42: Anschlagzapfen
- 43: Rückstellfeder
- 44: Formkurve
- 45: Schalterfuß
- 46: In Einschubrichtung geneigte erste Arbeitsfläche der Formkurve
- 47: In Einschubrichtung geneigte zweite Arbeitsfläche der Formkurve
- 48: Ausnehmung
- 49: Erste Seitenkante der Ausnehmung
- 50: Zweite Seitenkante der Ausnehmung
- 51: Nase an der ersten Seitenkante der Ausnehmung

## Patentansprüche

1. Schutzeinrichtung gegen Berühren spannungsführender Kontakte (3) in einem Einschubrahmen (1) eines Schaltgerätes mit zumindest einer verschiebbaren Schutzplatte (6) und mit einer Hebelanordnung (9, 12, 23) zur Betätigung der Schutzplatte (6),
- bei der die Hebelanordnung zwei gelenkig miteinander verbundene Hebel (9, 12) aufweist, von denen ein erster Hebel (9) mittels des Schaltgerätes betätigbar und der zweite Hebel (12) an die bewegliche Schutzplatte (6) angekoppelt ist,
- wobei der erste Hebel (9) in einer ersten Phase der Einschubbewegung des Schaltgerätes verschiebbar und in einer zweiten Phase der Einschubbewegung schwenkbar ist,
**dadurch gekennzeichnet,**
- **dass** das Verbindungsgelenk (11) der beiden Hebel (9, 12) zugleich das Schwenklager des ersten Hebels (9) bildet,
- **dass** der erste Hebel (9) einen Kulissenstein (32) aufweist und
- **dass** im Einschubrahmen (1) zwei Führungsflächen (34, 35) angeordnet sind, die eine stufenartig in Schwenkrichtung des ersten Hebels verlaufende Kulisse (33) für den Kulissenstein (32) bilden,
- wobei die eine (34) der beiden Führungsflächen zwei den beiden Einschubphasen zugeordnete, im wesentlichen in Verschiebungsrichtung des ersten Hebels (9) verlaufende, Trittstufen (37, 38) für den Kulissenstein (32) bilden und
- wobei die die beiden Trittstufen (37, 38) verbindende Setzstufe (39) in Schwenkrichtung des ersten Hebels (9) verläuft und eine dem Kulissenstein (32) zugeordnete Anschlagfläche bildet.

2. Schutzeinrichtung nach Anspruch 1,
**dadurch gekennzeichnet,**
- **dass** die zweite Führungsfläche eine in Schwenkrichtung des ersten Hebels verlaufende zweite Setzstufe (41) und eine in Einschubrichtung verlaufende dritte Trittstufe (40) für den Kulissenstein bildet und
- **dass** der erste Hebel (9) bei Nichtbetätigung unter der Kraft einer Rückstellfeder (43) in einer Anfangstellung gehalten ist, bei der die zweite Setzstufe (41) eine dem Kulissenstein (32) zugeordnete zweite Anschlagfläche bildet und bei der die dritte Trittstufe (40) eine dritte Anschlagfläche bildet, die einem am ersten Hebel (9) ausgebildeten Anschlagzapfen (42) zugeordnet ist.

3. Schutzeinrichtung nach einem der Ansprüche 2 oder 3,
**dadurch gekennzeichnet,**
**dass** das Schaltgerät eine dem freien Ende des ersten Hebels zugeordnete Formkurve (44) führt, die eine erste in Einschubrichtung des Schaltgerätes geneigte Arbeitsfläche (46) aufweist, mittels derer der erste Hebel (9) im Bereich der ersten Trittstufe (47) verschiebbar und am Ende der ersten Trittstufe (37) sich an die erste Setzstufe (39) anlegend.schwenkbar ist.

4. Schutzeinrichtung nach Anspruch 3,
**dadurch gekennzeichnet,**
**dass** die erste Arbeitsfläche (46) der Formkurve (44) an einer Ausnehmung (48) mündet, deren Seitenkanten (49, 50) parallel zur Einschubrichtung des Schaltgerätes verlaufen,
wobei an der ersten Seitenkante (49) eine Nase (51) ausgebildet ist und
wobei die zweite Seitenkante (50) eine dem freien Ende (10) des ersten Hebels zugeordnete vierte Anschlagfläche bildet.

5. Schutzeinrichtung nach einem der Ansprüche 3 oder 4,
**dadurch gekennzeichnet,**
**dass** die Formkurve (44) eine in Einschubrichtung des Schaltgerätes geneigte zweite Arbeitsfläche (47) aufweist, mittels derer der erste Hebel (9) soweit schwenkbar ist, dass der Kulissenstein (32) über die Ebene der dritten Trittstufe (40) hinaus, sich an der ersten Trittstufe (37) anlegend schwenkbar ist.

6. Schutzeinrichtung nach einem der Ansprüche 3 bis 5,
**dadurch gekennzeichnet,**
**dass** die Formkurve (44) an einem an dem Schaltgerät montierten Schalterfuß ausgebildet ist.

7. Schutzeinrichtung nach einem der Ansprüche 1 bis 6
**dadurch gekennzeichnet,**
**dass** die Hebelanordnung einen den zweiten Hebel (12) mit der Schutzplatte (6) koppelnden dritten Hebel (23) aufweist,
wobei an dem dritten Hebel (23) ein in ein Langloch (22) des zweiten Hebels (12) eingreifender Zapfen (24) und eine der Schutzplatte (6) zugeordnete Stützfläche (26) ausgebildet sind.

8. Schutzeinrichtung nach Anspruch 7,
**dadurch gekennzeichnet,**
**dass** Kontakten, die in zwei verschiedenen, übereinander angeordneten Ebenen verlaufen, zwei separate Schutzplatten zugeordnet sind,
wobei die beiden Schutzplatten (6) mittels einer Zugfeder (5) gekoppelt sind,
und wobei die der oberen Ebene zugeordnete Schutzplatte an einer ersten Stützfläche (26) und die der unteren Ebene zugeordneten Schutzplatte an einer Haltefläche (27) des dritten Hebels (23) anliegen.

## Claims

1. Protective unit to prevent contact with conductive contacts (3) in a withdrawable rack (1) of a switching device with at least one displaceable protective plate (6) and with a lever arrangement (9, 12, 23) for operating the protective plate (6),
- in which the lever arrangement has two levers (9, 12) which are interconnected in an articulated manner, of which a first lever (9) can be operated by means of the switching device and the second lever (12) is coupled to the movable protective plate (6),
- the first lever (9) being displaceable in a first phase of the pushing-in movement of the switching device and being pivotable in a second phase of the pushing-in movement,
**characterized**
- **in that** the linking joint (11) of the two levers (9, 12) acts simultaneously as the pivot bearing of the first lever (9),
- **in that** the first lever (9) has a slide block (32) and
- **in that** there are formed in the withdrawable rack (1) two guiding surfaces (34, 35), which form a slideway (33) for the slide block (32), running in a graded manner in the pivoting direction of the first lever,
- wherein one (34) of the two guiding surfaces forms two stepping stages (37, 38) for the slide block (32), which are allocated to the two pushing-in phases and run substantially in the direction of displacement of the first lever (9), and
- wherein the setting stage (39), connecting the two stepping stages (37, 38), runs in the pivoting direction of the first lever (9) and forms a stop surface allocated to the slide block (32).

2. Protective unit according to Claim 1,
**characterized**
- **in that** the second guiding surface forms a second setting stage (41), running in the pivoting direction of the first lever, and a third stepping stage (40) for the slide block, running in the pushing-in direction,
- and **in that**, if it is not operated, the first lever (9) is held under the force of a return spring (43) in an initial position, in which the second setting stage (41) forms a second stop surface, allocated to the slide block (32), and in which the third stepping stage (40) forms a third stop surface, which is allocated to a stop pin (42) formed on the first lever (9).

3. Protective unit according to one of Claims 2 or 3,
**characterized**
**in that** the switching device carries a forming cam (44), which is allocated to the free end of the first lever and has a first working surface (46), which is inclined in the pushing-in direction of the switching device and by means of which the first lever (9) is displaceable in the region of the first stepping stage (47) and, at the end of the first stepping stage (37), is pivotable, making itself lie adjacent to the first setting stage (39).

4. Protective unit according to Claim 3,
**characterized**
**in that** the first working surface (46) of the forming cam (44) opens out at a recess (48), the side edges (49, 50) of which run parallel to the pushing-in direction of the switching device, with a lug (51) being formed on the first side edge (49) and
the second side edge (50) forming a fourth stop surface, allocated to the free end (10) of the first lever.

5. Protective unit according to Claim 3 or 4,
**characterized**
**in that** the forming cam (44) has a second working surface (47), which is inclined in the pushing-in direction of the switching device and by means of which the first lever (9) can be pivoted to such an extent that the slide block (32) can be pivoted beyond the plane of the third stepping stage (40), making it lie adjacent to the first stepping stage (37).

6. Protective unit according to one of Claims 3 to 5,
**characterized**
**in that** the forming cam (44) is formed on a switch foot mounted on the switching device.

7. Protective unit according to one of Claims 1 to 6,
**characterized**
**in that** the lever arrangement has a third lever (23), coupling the second lever (12) to the protective plate (6),
with a pin (24) which engages in a slot (22) of the second lever (12) and a supporting surface (26) which is allocated to the protective plate (6) being formed on the third lever (23).

8. Protective unit according to Claim 7,
**characterized**
**in that** contacts which run in two different planes, arranged one above the other, are allocated two separate protective plates,
the two protective plates (6) being coupled by means of a tension spring (5),
and the protective plate allocated to the upper plane lying adjacent to a first supporting surface (26) and the protective plate allocated to the lower plane lying adjacent to a holding surface (27) of the third lever (23).

## Revendications

1. Dispositif de protection empêchant tout contact avec des contacts conducteurs (3) dans un tiroir (1) d'un appareil de commutation doté d'au moins une plaque de protection (6) mobile et d'un dispositif de levier (9, 12, 23) pour actionner la plaque de protection (6),
dans lequel le dispositif de levier a deux leviers (9, 12) articulés entre eux, parmi lesquels un premier levier (9) peut être actionné au moyen de l'appareil de commutation et le deuxième levier (12) est couplé à la plaque de protection (6) mobile,
le premier levier (9) pouvant coulisser lors d'une première phase du mouvement d'insertion de l'appareil de commutation et pouvant pivoter lors d'une deuxième phase du mouvement d'insertion,
**caractérisé**
**en ce que** l'assemblage articulé (11) des deux leviers (9, 12) forme en même temps le palier pivotant du premier levier (9),
que le premier levier (9) présente un coulisseau (32) et
**en ce que** deux surfaces de guidage (34, 35) sont disposées dans le cadre du tiroir (1) et forment une coulisse (33) prévue pour le coulisseau (32) et s'étendant sous forme de marches dans la direction de pivotement du premier levier,
l'une (34) des deux surfaces de guidage forme deux marches (37, 38) pour le coulisseau (32), lesquelles sont associées aux deux phases d'insertion, s'étendent pour l'essentiel dans la direction de déplacement du premier levier (9) et
la contremarche (39) reliant les deux marches (37, 38) s'étendant dans la direction de pivotement du premier levier (9) et forme une surface de butée associée au coulisseau (32).

2. Dispositif de protection selon la revendication 1,
**caractérisé**
**en ce que** la deuxième surface de guidage forme une deuxième contremarche (41) s'étendant en direction de pivotement du premier levier et forme une troisième marche (40) pour le coulisseau, laquelle s'étend dans la direction d'insertion, en ce que le premier levier (9) est maintenu dans une position initiale en cas de non actionnement par la force d'un ressort de rappel (43), position dans laquelle la deuxième contremarche (41) forme une deuxième surface de butée associée au coulisseau (32) et dans laquelle la troisième marche (40) forme une troisième surface de butée associée à un tenon (42) de butée constitué sur le premier levier (9).

3. Dispositif de protection selon l'une quelconque des revendications 2 ou 3, **caractérisé en ce que** l'appareil de commutation guide une forme incurvée (44) associée à l'extrémité libre du premier levier, ladite forme incurvée présentant une première surface d'usure (46) inclinée dans la direction d'insertion de l'appareil de commutation, à l'aide de laquelle le premier levier (9) peut coulisser dans la zone de la première marche (47) et peut pivoter à l'extrémité de la première marche (37) en s'appuyant sur la première contremarche (39).

4. Dispositif de protection selon la revendication 3, **caractérisé en ce que** la première surface d'usure (46) de la forme incurvée (44) débouche dans un évidement(48) dont les arêtes latérales (49, 50) s'étendent parallèlement à la direction d'insertion de l'appareil de commutation, un bec (51) étant constitué sur la première arête latérale (49) et la deuxième arête latérale (50) formant une quatrième surface de butée associée à l'extrémité libre (10) du premier levier.

5. Dispositif de protection selon l'une quelconque des revendications 3 ou 4, **caractérisé en ce que** la forme incurvée (44) présente une deuxième surface d'usure (47) inclinée dans la direction d'insertion de l'appareil de commutation, au moyen de laquelle le premier levier (9) peut pivoter jusqu'à ce que le coulisseau (32) puisse pivoter hors du plan de la troisième marche (40),en s'appuyant sur la première marche (37).

6. Dispositif de protection selon l'une quelconque des revendications 3 à 5, **caractérisé en ce que** la forme incurvée (44) est constituée sur une embase de commutateur montée sur l'appareil de commutation.

7. Dispositif de protection selon l'une quelconque des revendications 1 à 6, **caractérisé en ce que** le dispositif de levier présente un troisième levier (23) couplant le deuxième levier (12) à la plaque de protection (6),
un tenon (24) pénétrant dans un trou oblong (22) du deuxième levier (12) et une surface d'appui (26), associée à la plaque de protection (6), étant constitués sur le troisième levier (23).

8. Dispositif de protection selon la revendication 7, **caractérisé en ce que** des contacts qui s'étendent dans deux plans différents disposés l'un au-dessus de l'autre sont associés à deux plaques de protection distinctes,
les deux plaques de protection (6) étant couplées au moyen d'un ressort de traction (5)
et la plaque de protection associée au plan supérieur s'appliquant à une première surface de protection (26) et la plaque de protection associée au plan inférieur s'appliquant à une surface d'arrêt (27) du troisième levier (23).
